# EUROPÄISCHE PATENTSCHRIFT

(11) **EP 1 563 612 B1**
(45) Veröffentlichungstag und Bekanntmachung des Hinweises auf die Patenterteilung: **09.08.2006**
(21) Anmeldenummer: 03769244.9
(22) Anmeldetag: 16.10.2003
(51) Int. Cl.: H04B 1/38, H01Q 1/24, H04M 1/02, H04N 7/14

(54) **FUNKKOMMUNIKATIONSGERÄT SOWIE ZUGEHÖRIGE KOPPELSTRUKTUR AUS MINDESTENS EINER LEITERPLATINE UND MINDESTENS EINER DARAN ANGEKOPPELTEN FLACHANTENNE**
RADIO COMMUNICATION DEVICE AND ASSOCIATED COUPLING STRUCTURE COMPRISING AT LEAST ONE CONDUCTOR BOARD AND AT LEAST ONE FLAT ANTENNA COUPLED THERETO
APPAREIL DE RADIOCOMMUNICATIONS ET STRUCTURE DE COUPLAGE ASSOCIEE, FORMEE PAR AU MOINS UNE CARTE DE CIRCUITS ET AU MOINS UNE ANTENNE PLATE COUPLEE A CETTE DERNIERE

(30) Priorität: 22.10.2002 DE 10249221; 29.09.2003 DE 10345230
(43) Veröffentlichungstag der Anmeldung: 17.08.2005
(73) Patentinhaber: SIEMENS AKTIENGESELLSCHAFT, 80333 München (DE)
(72) Erfinder: PINTO, Alexandre, DK-9000 Aalborg (DK); SIEBINGER, Stefan, 89312 Günzburg (DE); OELSCHLÄGER, Martin, 12247 Berlin (DE); BRUNEL, Roman, 89073 Ulm (DE); SCHREIBER, Michael, 85655 Aying-Göggenhofen (DE); HUBER, Stefan, 80798 München (DE); KOWALSKI, Thorsten, 81737 München (DE); FRIEDERICH, Alexander, DK-9000 Aalborg (DK)
(86) Internationale Anmeldenummer: PCT/DE2003/003435
(87) Internationale Veröffentlichungsnummer: WO 2004/038940

(56) Entgegenhaltungen:
- EP-A- 1 028 577
- EP-A- 1 239 327
- WO-A-02/01670
- WO-A-03/030297

## Beschreibung

Funkkommunikationsgerät sowie zugehörige Koppelstruktur aus mindestens einer Leiterplatine und mindestens einer daran angekoppelten Flachantenne

Die Erfindung betrifft ein Funkkommunikationsgerät mit mindestens einer Leiterplatine und mindestens einer Flachantenne in seinem Gehäuse, die mit Höhenabstand zueinander unter Bildung einer Koppelstruktur angeordnet sind, wodurch in dieser Koppelstruktur zwischen der Flachantenne und der Leiterplatine ein Koppelraum mit vorgebbarem Antennenvolumen eingeschlossen ist.

Bei Funkkommunikationsgeräten, insbesondere mobilen Kommunikationsendgeräten, geht der Trend zu immer kleineren Modellen, die mit immer mehr Komponenten und Leistungsmerkmalen ausgestattet sind. So kann neben Funktionskomponenten wie z.B. Display, Tastatur, Hochfrequenzbaugruppe, Basisbandeinheit, usw. auch eine Flachantenne im Gehäuse eines Funkkommunikationsgeräts zu ihrem mechanischen Schutz integriert sein. Dabei ist ein bestimmtes Raumvolumen zwischen der Flachantenne und der Leiterplatine belegt und auch erforderlich, um noch einwandfrei Funkstrahlungsfelder senden und/oder empfangen zu können. Ist der zusätzliche Einbau einer Aufnahmekamera in ein derartiges Funkkommunikationsgerät gewünscht, so würde weiterer Platz in dessen Gehäuse benötigt werden, der dort aufgrund der hohen Packungsdichte mit Funktionskomponenten nicht mehr ausreichend zur Verfügung steht. Allenfalls durch eine Vergrößerung der Gehäuseabmessungen könnte die Aufnahmekamera noch im Funkkommunikationsgerät untergebracht werden, was unattraktiv wäre.

Der Erfindung liegt die Aufgabe zugrunde, ein Funkkommunikationsgerät mit möglichst kompaktem Gehäuse bereitzustellen, in dem mindestens eine Flachantenne und zusätzlich mindestens eine Kamera unterbringbar sind. Diese Aufgabe wird bei einem Funkkommunikationsgerät der eingangs genannten Art dadurch gelöst, dass mindestens eine Kamera derart im oder am Koppelraum der Koppelstruktur angeordnet ist, dass sie gleichzeitig einen Bestandteil des Antennenvolumens der Koppelstruktur bildet.

Der sowieso vorhandene und benötigte Koppelraum zwischen der Leiterplatine und der daran angekoppelten Flachantenne zum Abstrahlen und/oder Empfangen von Funkstrahlungsfeldern wird also teilweise oder ganz von der Kamera mit ausgenutzt, so dass sich insgesamt eine weitgehend dicht gepackte bzw. kompakte, platzbedarfsreduzierte Koppeleinheit aus Leiterplatine, Flachantenne sowie Kamera ergibt. Da die Kamera teilweise oder ganz Bestandteil des vorhandenen Antennenvolumens der Koppelstruktur ist, können die ursprünglichen Gehäuseabmessungen des Funkkommunikationsgeräts ohne Kamera auch nach dem Einbau der zusätzlichen Kamera weitgehend beibehalten oder sogar noch unterschritten werden. Durch den zusätzlichen Einbau der Kamera im oder am Koppelraum der Koppelstruktur geht kaum oder gar kein Antennenvolumen der Koppelstruktur verloren, so dass Funkstrahlungsfelder einwandfrei gesendet und/oder empfangen werden können. Durch diese Doppelnutzung des Koppelraums sind insbesondere längenverkürzte Bauformen des Gehäuses für das Funkkommunikationsgerät ermöglicht.

Die Erfindung betrifft auch eine Koppelstruktur aus mindestens einer Leiterplatine und mindestens einer daran mit Höhenabstand angekoppelten Flachantenne für ein Funkkommunikationsgerät, wodurch zwischen der Antenne und der Leiterplatine ein Koppelraum mit vorgebbarem Antennenvolumen eingeschlossen ist, welche dadurch gekennzeichnet ist, dass mindestens eine Kamerakomponente einer Kamera derart im oder am Koppelraum der Koppelstruktur angeordnet ist, dass sie gleichzeitig einen Bestandteil des Antennenvolumens bildet.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: schematisch im Längsschnitt von einer Längsseite her betrachtet den Aufbau eines ersten Ausführungsbeispiels eines erfindungsgemäßen Funkkommunikationsgeräts, bei dem eine Kamera zusätzlich im Koppelraum zwischen seiner Flachantenne und seiner Leiterplatine als Bestandteil des dort eingeschlossenen Antennenvolumens untergebracht ist,
- Figur 2: schematisch in Draufsicht die Koppelstruktur aus der Leiterplatine und der daran angekoppelten Flachantenne des Funkkommunikationsgeräts von Figur 1, die eine platzsparende Unterbringung der zusätzlichen Aufnahmekamera in ihrem Koppelraum erlaubt,
- Figur 3: schematisch im Längsschnitt den Aufbau der Aufnahmekamera im Gehäuse des Funkkommunikationsgeräts von Figur 1,
- Figuren 4, 5: jeweils in schematischer Darstellung zwei Varianten zur Unterbringung der Aufnahmekamera im Koppelraum der Koppelstruktur von Figur 1,
- Figur 6: schematisch in räumlicher Darstellung ein weiteres Ausführungsbeispiel eines erfindungsgemäßen Funkkommunikationsgeräts mit integrierter Flachantenne und zusätzlich integrierter Aufnahmekamera, die in eine Aussparung der Koppelstruktur aus Leiterplatine und daran angekoppelter Flachantenne untergebracht ist,
- Figuren 7, 8: jeweils schematisch in Draufsicht zwei weitere Koppelstrukturen aus einer Leiterplatine und einer daran angekoppelten Flachantenne, die ebenfalls eine platzsparende Unterbringung einer zusätzlichen Aufnahmekamera in einer von Vorder- zur Rückseite der Koppelstruktur durchgehenden Aussparung im Gehäuse des Funkkommunikationsgeräts von Figur 6 erlauben, und
- Figur 9: schematisch in Draufsicht eine weitere Modifikation der Koppelstruktur von Figur 6.

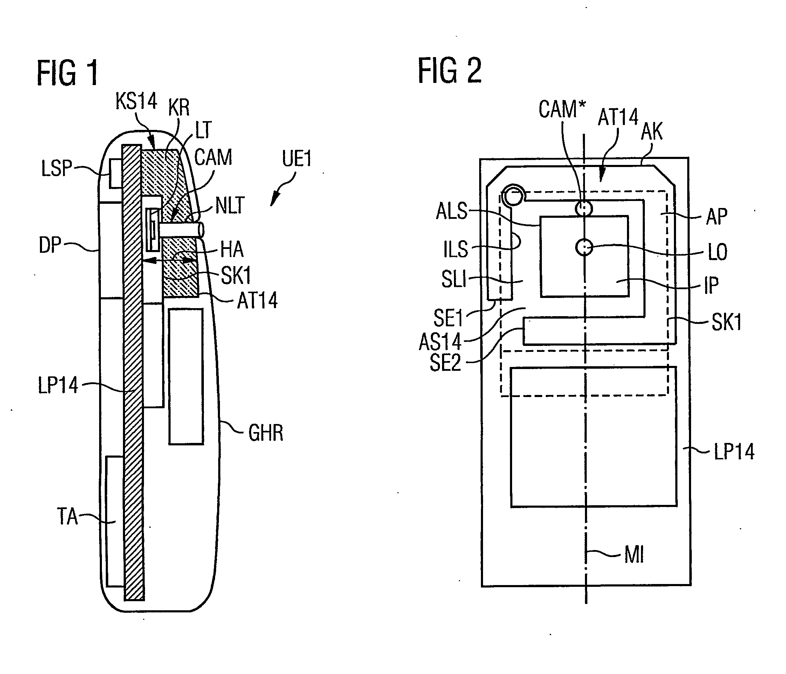

Elemente mit gleicher Funktion und Wirkungsweise sind in den Figuren 1 mit 9 jeweils mit denselben Bezugszeichen versehen.

Figur 1 zeigt schematisch im Längsschnitt von einer Längsseite her betrachtet ein erstes Funkkommunikationsgerät UE1. Dieses Funkkommunikationsgerät UE1 weist in seinem Gehäuse GHR eine Leiterplatine LP14 auf, an die eine Flachantenne AT14 unter Bildung einer Koppelstruktur KS14 angekoppelt ist. Diese im Gehäuse GHR integrierte Flachantenne AT14 ist im Höhenabstand HA zur Bestückungsoberfläche der Leiterplatine LP14 angeordnet. Sie ist hier der Rückseite der Leiterplatine LP14 zugeordnet, d.h. derjenigen Leiterplatinenfläche, die Bedienungskomponenten wie z.B. Lautsprecher-/Mikrofoneinheit LSP, Display bzw. Anzeigevorrichtung DP, Tastatur TA auf der Vorderseite des Funkkommunikationsgeräts UE1 gegenüberliegt. Auf diese Weise ist die Flachantenne AT14 beim bestimmungsgemäßen Gebrauch des Funkkommunikationsgeräts UE1 vom Kopf des jeweiligen Benutzers weggerichtet und kann weitgehend frei in den Raum abstrahlen und weitgehend ungehindert Funkstrahlungsfelder empfangen. Die Flachantenne AT14 ist in der oberen Teilhälfte der Leiterplatine LP14 positioniert und ist im Bereich der oberen Breitseite der Leiterplatine LP14 galvanisch mit dieser zur Stromspeisung verbunden. Sie ist derart mit Höhenabstand oberhalb der Rückseite der Leiterplatine LP14 schichtartig angeordnet, dass ihre gedachte orthogonale Projektion auf die Bauelementbestückungsfläche der Leiterplatine LP14 im wesentlichen innerhalb einer durch deren Seitenränder aufgespannten Begrenzungsfläche liegt. Auf diese Weise ist zwischen der Leiterplatine LP14 und ihrer angekoppelten Flachantenne AT14 ein Koppelraum KR mit einem vorgegebenen Antennenvolumen eingeschlossen. Ein ausreichendes Antennenvolumen dient dem Zweck, dass sich elektromagnetische Felder zwischen der Flachantenne AT14 und der Leiterplatine LP14 im ausreichenden Maß ausbilden können. Nur wenn ein bestimmtes Mindestantennenvolumen eingehalten werden kann, kann ein einwandfreies Senden und/oder Empfangen von Funksignalen weitgehend sichergestellt werden. Je nach Bauform, Bautyp sowie sonstiger Geometrieverhältnisse der Koppelstruktur aus Leiterplatine und Flachantenne wird dieses Antennenvolumen des Koppelraums spezifisch eingestellt. Abweichungen davon würden zu Beeinträchtigungen im Antennenverhalten, insbesondere bezüglich der Antennenperformance führen. Z.B. würde eine Verringerung des Antennenvolumens mit einer Reduzierung der Abstrahlungsleistung der Antenne einhergehen.

Dennoch ist in dem Koppelraum KR der Koppelstruktur KS14 von Figur 1 zusätzlich eine Aufnahmekamera CAM zumindest teilweise eingebracht. Um zu vermeiden, dass sie das nutzbare Antennenvolumen im Koppelraum KR verringert, ist lediglich ihre elektromagnetisch unempfindliche Kamerakomponente NLT im Koppelraum KR der Koppelstruktur KS14 angeordnet. Diese elektromagnetisch unempfindliche Kamerakomponente NLT ist im wesentlichen durch die Optik sowie durch die Optikhalterung der Aufnahmekamera gebildet. Denn für diese ist ein elektrisch nichtleitendes Material, insbesonder ein Hochfrequenzmaterial mit kleiner Dielektrizitätskonstante und geringen HF-Verlustfaktor verwendet.

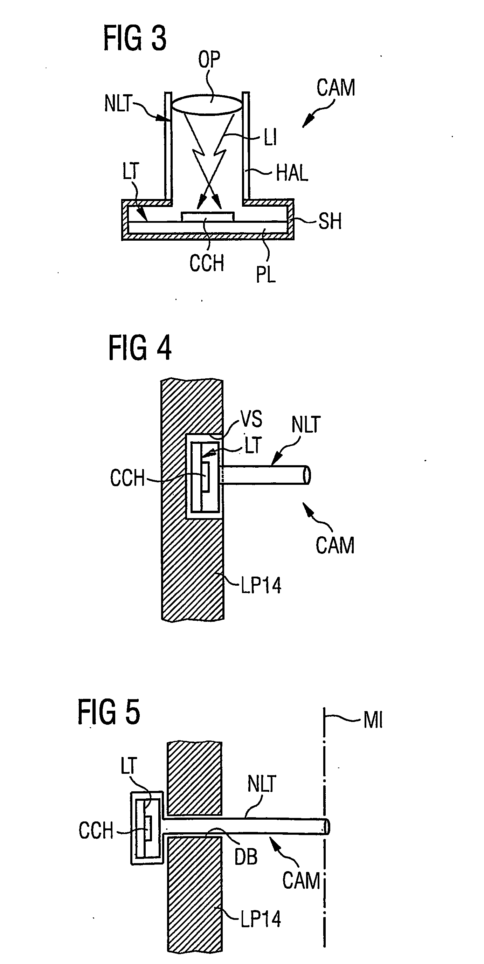

Die Hauptkomponenten der Kamera CAM zeigt Figur 3 schematisch im Längsschnitt. Dort ist die Aufnahmeoptik OP, insbesondere ein Kameraobjektiv bzw. eine Kameralinse, im stirnseitigen Ende einer kreiszylinderförmigen Halterung HAL angebracht. Lichtstrahlen LI, die durch die Kameraoptik OP von außen einfallen, werden entlang der Längserstreckung der Halterung HAL geführt und fallen unterhalb der Halterung HAL auf den zur Eingangsöffmung fluchtend angeordneten Sensor eines Kamerachips CCH. Dieser nimmt die Umwandlung der Lichtstrahlen LI in elektrische Signale vor. Insbesondere ist als Sensor ein sogenanntes CCD-Element vorgesehen (Coupled Charge Device). Der Kamerachip CCH sitzt auf einer Leiterplatine PL, die weitere elektrische Baugruppen zur Verarbeitung der elektrischen Auswertesignale für die Bildinformation aufweist. Die elektrische Leiterplatine PL mit dem darauf aufgebrachten elektrischen Kamerachip CCH ist in einer Art Fuß SH auf der der Optik OP abgewandten Stirnseite der Halterung HAL untergebracht. Diese Aufnahmevorrichtung SH bildet eine Aufnahmekammer für die Leiterplatine PL mit dem darauf sitzenden Kamerachip CCH. Sie ist hier im Ausführungsbeispiel im Wesentlichen rechteckförmig ausgebildet. Die Halterung HAL erstreckt sich im wesentlichen senkrecht zur Oberseite dieser Aufnahmevorrichtung SH und schließt weitgehend dicht mit dem Deckel der Aufnahmevorrichtung SH ab. Der Kamerachip CCH und die Platine PL mit Elektronik zur Ansteuerung und zum Betreiben des Kamerachips CCH werden mit hohen Taktraten, insbesondere im Megahertz-Bereich betrieben. Sie bilden deshalb die elektromagnetisch empfindliche Kamerakomponente LT der Kamera CAM. Um störende Wechselwirkungen zwischen den elektrischen Signalen dieser Kamerakomponente LT und den elektromagnetischen Feldern im Koppelraum KR der Koppelstruktur KS14 möglichst zu vermeiden, ist die Aufnahmevorrichtung SH der Kamera CAM in einer elektromagnetischen Abschirmkammer SK1 untergebracht. Dies ist insbesondere die elektromagnetische Abschirmkammer für die Hochfrequenzbaugruppe der Leiterplatine LP14, die sowieso vorhanden ist. Um die elektrisch leitfähigen Kamerakomponenten in der Schirmkammer SK1 unterzubringen, ist in deren Deckel ein Loch bzw. eine Öffnung vorgesehen, in die die Optikhalterung HAL an ihrem der Optik OP abgewandten Ende eingeführt ist. Da die Optik OP sowie deren Optikhalterung HAL im wesentlichen aus einem nichtleitenden Material sind, können diese im Koppelraum KR verbleiben, ohne dass das ursprünglich nutzbare Antennenvolumen unzulässig beeinflusst, insbesondere reduziert wird. Die aus der Optik OP sowie deren Optikhalterung HAL gebildete elektromagnetisch unempfindliche Kamerakomponente NLT bildet also gleichzeitig einen Bestandteil des Antennenvolumens der Koppelstruktur KS14, weil sie im Hochfrequenzbereich für die elektromagnetischen Felder der Antenne AT14 weitgehend "unsichtbar" ist. Aufgrund ihrer nichtleitenden Eigenschaften ist zwischen dieser elektromagnetisch unempfindlichen Kamerakomponente NLT und der elektrisch leitfähigen Abschirmkammer SK1 am Einführort, d.h. dort wo die elektromagnetisch unempfindliche Kamerakomponente NLT durch den Deckel der Schirmkammer SK1 hindurchgesteckt ist, ein Kurzschluss weitgehend vermieden. Denn dort kontaktiert die Optikhalterung HAL elektrisch nichtleitend den Innenrand der Durchgangsöffnung der elektrisch leitfähigen Abschirmkammer SK1. Dadurch, dass die elektrisch leitfähigen Teile der Aufnahmekamera CAM außerhalb des Koppelraums KR elektromagnetisch abgeschirmt angeordnet sind, und lediglich die elektromagnetisch unempfindlichen Teile der Aufnahmekamera CAM im Koppelraum KR untergebracht sind, sind Beeinträchtigungen des elektromagnetischen Koppelfeldes zwischen der Flachantenne AT14 und der Leiterplatine LP14 weitgehend vermieden. Es kommt somit kaum oder gar nicht zu einer elektromagnetischen Absorption von elektromagnetischer Strahlung der Antenne AT14 aufgrund der zusätzlich in den Koppelraum KR eingebrachten Kamerakomponente NLT.

Zusätzlich oder unabhängig von der Unterbringung der elektrisch empfindlichen Kamerakomponente LT in der Abschirmkammer SK1 kann es gegebenenfalls auch zweckmäßig sein, die fußartige Aufnahmekammer SH der Kamera CAM selbst als elektromagnetische Abschirmung auszubilden. Dann kann die Kamera CAM sogar ganz im Koppelraum KR der Koppelstruktur KS14 untergebracht werden.

Vorteilhaft kann es insbesondere sein, die elektromagnetisch empfindliche Kamerakomponente LT in eine Ausnehmung der Leiterplatine LP14 abzusenken. Diese ist in der Figur 4 schematisch dargestellt. Dort sitzt die fußartige Aufnahmekammer SH für die elektromagnetisch empfindliche Kamerakomponente LT in der Aussparung bzw. Nut VS der Leiterplatine LP14. Durch diese Integration der elektromagnetisch empfindlichen Kamerakomponente in die Wandung der Leiterplatine LP14 hinein, kann das frei nach außen abstehende Teilstück der Kamera CAM verringert, d.h. verkürzt werden. Dies wird vorzugsweise durch die elektromagnetisch unempfindlich Kameraoptik sowie deren Halterung gebildet. Dadurch kann die Kamera CAM auch in einem flacheren Gehäuse mit geringerer Bauhöhe untergebracht werden. Bei üblichen Leiterplatinen kann insbesondere der in den Koppelraum KR frei abstehende Teil der Kamera CAM zwischen 0,6 und 1,4 mm reduziert werden.

Von Vorteil kann es auch sein, die elektromagnetisch empfindliche Kamerakomponente auf der der Flachantenne gegenüberliegenden Seite der Leiterplatine außerhalb des Koppelraums der Koppelstruktur anzuordnen. Dies veranschaulicht Figur 5. Dort ist die Kamera CAM durch ein Loch bzw. eine Durchgangsbohrung DB in der Leiterplatine LP14 soweit mit ihrer elektromagnetisch unempfindlichen Optikhalterung hindurchgeführt, dass ihre elektromagnetisch empfindliche Kamerakomponente LT auf der der Antenne AT14 gegenüberliegenden Bauelementbestückungsfläche der Leiterplatine LP14 liegt. Die elektrisch leitfähige Leiterplatine LP14 wirkt dabei in gewissem Umfang als elektromagnetische Abschirmung für die Kamerakomponente LT. Durch diese komplette Hindurchführung der elektromagnetisch empfindlichen Kamerakomponente LT auf die andere Seite (Vorderseite) der Leiterplatine LP14 kann die in den Koppelraum KR hineinragende, elektromagnetisch unempfindliche Kamerakomponente noch weiter in der Bauhöhe gegenüber der Anordnung von Figur 4 verringert werden. Dadurch sind besonders flache Gehäusebauformen ermöglicht. Denn die Kamera CAM steht mit ihrer elektromagnetisch unempfindlichen Kamerakomponente NLT nur noch auf einem gegenüber der Anordnung von Figur 1 verkürzten Teilstück in den Koppelraum KR vor.

Figur 2 zeigt in schematischer Draufsicht die Koppelstruktur KS14 von Figur 1. Die Leiterplatine LP14 ist im wesentlichen rechteckförmig ausgebildet. In ihrer oberen Teilhälfte im Bereich ihrer oberen Stirnseite ist die Flachantenne AT14 angeordnet. Sie ist vorzugsweise als sogenannte PIFA ("Planar-inverted F-Antenna") ausgebildet. Sie weist ein Innenteil IP auf, das durch einen Schlitz SLI von ihrem Außenrahmenteil AP zumindest teilweise getrennt ist. Das Innenteil IP ist hier im Ausführungsbeispiel von Figur 2 im wesentlichen rechteckförmig ausgebildet. Das Außenrahmenteil AP umgibt dieses rechteckförmige, flächige Innenteil IP im wesentlichen auf allen vier Seiten bis auf eine Ecke. Hier im Ausführungsbeispiel weist der Außenrahmenteil AP im Bereich der linken unteren Ecke eine Aussparung AS14 auf. Der Schlitz SLI zwischen dem Außenrahmenteil AP und dem Innenteil IP erstreckt sich ausgehend von dieser Aussparung AS14 und endet auch wieder bei dieser. Auf diese Weise ist der Schlitz SLI als rechteckigförmiger Rahmen ausgebildet, der das Außenrahmenteil AP vollständig vom Innenteil IP abtrennt. Das Innenteil IP weist in seinem Zentrum eine Öffnung bzw. ein Loch LO auf, unterhalb der die Kamera CAM im Koppelraum angeordnet ist. Unmittelbar unterhalb der Öffnung LO oder in der Öffnung LO sitzt dabei die Kameraoptik OP, um Bilder von außen aufnehmen zu können.

Alternativ dazu kann es gegebenenfalls auch zweckmäßig sein, die Kamera CAM derart bezogen auf die Lageebene der Flachantenne AT14 zu positionieren, dass sie im Schlitz SLI zwischen dem Außenrahmenteil SLI und dem Innenteil IP angeordnet ist. Auch hierbei ist es zweckmäßig, die Kamera an einer Stelle zu positionieren, die im wesentlichen auf der Symmetrieachse bzw. Mittenlinie MI der Leiterplatine LP14 liegt. Dadurch ist für den jeweiligen Benutzer die Handhabung, insbesondere Ausrichtung der Kamera auf ein gewünschtes Bildobjekt erleichtert. Diese weitere, mögliche Kameraposition in der Lageebene der Flachantenne AT14 von Figur 2 ist dort zusätzlich strichpunktiert eingezeichnet und mit dem Bezugszeichen CAM* versehen.

Gegebenenfalls kann es auch zweckmäßig sein, die Kamera in der Lageebene der Flachantenne AT14 betrachtet im Bereich einer Ecke der Flachantenne wie z.B. in der Aussparung AS14 vorzusehen. Auch dieser Eckbereich ist noch dem Koppelraum KR der Antenne AT14 zugeordnet und bietet genügend Platz, die Kamera unter Beibehaltung der bestehenden Gehäuseabmessungen unterbringen zu können.

Selbstverständlich ist es auch möglich, eine Bohrung im Außenrahmenteil AP der Flachantenne AT14 vorzusehen, unterhalb der die Kamera CAM im Raum KR untergebracht sein kann.

Allen Ausführungsvarianten ist gemeinsam, dass die Kamera in der Lageebene der Flachantenne betrachtet innerhalb eines Bereiches angeordnet ist, der von der Außenkontur AK des Außenrahmenteils AP begrenzt ist. Dadurch wird der sowieso vorhandene Koppelraum KR unterhalb der Flachantenne als Aufnahmeraum für die Kamera mitgenutzt.

Zusammenfassend betrachtet kann also der sowieso vorhandene Koppelraum mit vorgegebenem Antennenvolumen in der Koppelstruktur aus der Leiterplatine und der im Höhenabstand dazu angeordneten Flachantenne dazu genutzt werden, im oder am Koppelraum der Koppelstruktur mindestens eine Kamera derart anzuordnen, dass sie gleichzeitig einen Bestandteil des Antennenvolumens der Koppelstruktur bildet. Dadurch ist es nicht erforderlich, für das zusätzliche Unterbringen der Kamera das Gehäuse zu vergrößern, insbesondere zu verlängern oder zu verbreitern. Es ist vielmehr eine integrative Gesamtstruktur aus Leiterplatine, Flachantenne und dazwischen eingebauter Kamera gebildet, die eine Doppelausnutzung des schon vorhandenen Antennenvolumens erlaubt. Die erste Nutzung des Koppelraums ist die Ausbildung eines elektromagnetischen Koppelfeldes zwischen der Flachantenne und der Leiterplatine. Die zweite Nutzung ist die zusätzliche Unterbringung der Kamera. Aufgrund der äußerst kompakten Gesamtstruktur ergeben sich dann auch optimale Freiheitsgrade für das Gehäusedesign des Funkkommunikationsgeräts bei gleichzeitigem Erhalt der Antennenfunktion.

Von Vorteil ist also, dass die Aufnahmekamera vorzugsweise mitten im Antennenvolumen positioniert ist. Hierbei wird der Effekt ausgenutzt, dass die gesamte Optik der Kamera aus elektrisch nichtleitenden Materialien aufgebaut ist, die lediglich geringe HF-Verluste und eine kleine Dielektrizitätskonstante aufweisen. Das gesamte Volumen für die Optik der Kamera kann dadurch gleichzeitig auch von der Antenne genutzt werden. Die Kameraposition hat damit mehr Freiheitsgrade und kann aus Symmetriegründen insbesondere in der Mitte bzw. auf der Symmetrieachse der Leiterplatine liegen, obwohl dieses Volumen für die Antenne verwendet wird.

Gleichzeitig ist eine Schirmung der EMV-empfindlichen Bereiche der Kamera mit einer Abschirmkammer zweckmäßig. Bei Kameras mit großer Brennweite ist es auch möglich, den Kamerachip zwischen der Leiterplatine und dem Display zu positionieren (vgl. Figur 5). Hierbei wird ein Loch in der Leiterplatine an der erforderlichen Stelle für die Optik vorgesehen. Bei diesem Aufbaukonzept ist der Kamerachip erheblich geringeren Feldstärken als im Koppelraum unter der Antenne ausgesetzt, so dass eventuell auf eine elektromagnetische Abschirmung der elektrisch leitenden Teile der Kamera verzichtet werden kann. In der Antenne, die aus elektrisch leitenden Materialien wie z.B. flächigen Metallteilen besteht, ist für die Optik der Kamera an der entsprechenden Stelle eine kleine Bohrung vorgesehen. Hierbei wird zusätzlich der Effekt ausgenutzt, dass elektrisch kleine Löcher in der flächigen Struktur der Flachantenne deren Antenneneigenschaften weitgehend unverändert lassen. Mit anderen Worten ausgedrückt heißt das, dass ein im Verhältnis zur Gesamtfläche der Antenne kleines Bohrloch die elektromagnetischen Abstrahlungs- und Empfangseigenschaften der Antenne nicht oder kaum verändert. Vorzugsweise liegt der Lochdurchmesser zwischen 5 und 9 mm bei einer Platine mit einer Länge von 40 mm und 24 mm Breite. Dadurch, dass die integrierte Kamera in vorteilhafter Weise im wesentlichen in eine elektrisch leitende und in eine elektromagnetisch unempfindliche Kamerakomponente zweigeteilt ist, lässt sich der elektromagnetisch unempfindliche Kamerateil im Antennenvolumen selbst positionieren und der elektrisch leitende Kamerateil außerhalb des Antennenvolumens. Der elektromagnetisch unempfindliche Kamerateil ist vorzugsweise durch die Kameraoptik sowie deren Halterung gebildet. Dafür eignen sich entsprechende Hochfrequenzmaterialien, die verlustarm und elektrisch nicht leitend sind, sowie zusätzlich eine kleine Dielektrizitätskonstante aufweisen. Somit sind elektromagnetische Verluste aufgrund der zusätzlich im Antennenvölumen platzierten Kamera weitgehend vermieden. Zusätzlich ist es möglich, den empfindlichen elektronischen Teil der Kamera mit einer Abschirmkammer zu schützen.

Durch diese integrative Gesamtstruktur aus Flachantenne, Leiterplatine und dazwischen eingefügter Kamera lässt sich eine weitere Miniaturisierung des Gehäuses für ein Funkkommunikationsgerät erreichen. Insbesondere sind besonders flache Bauformen für das Gehäuse eines Funkkommunikationsgeräts ermöglicht.

Eine vorteilhafte Weiterbildung betrifft ein Funkkommunikationsgerät mit mindestens einer Leiterplatte und mit mindestens einer Flachantenne, die an die Leiterplatte unter Bildung einer Koppelstruktur zum Senden und/oder Empfangen elektromagnetischer Funkstrahlungsfelder angekoppelt ist.

Bei einem Funkkommunikationsgerät mit einer in dessen Gehäuse untergebrachten Flach- bzw. Planarantenne (sogenannte "Patchantenne") ist diese Flachantenne über der Leiterplatte des Funkkommunikationsgeräts in einem vorgebbaren Höhenabstand angeordnet und deckt dabei schichtartig eine Teilfläche der Leiterplatte ab. Bei einem herkömmlichen Mobilfunkgerät sind solche "Patchantennen", insbesondere dual- oder tribandfähige Planarantennen, üblicherweise in der oberen Teilhälfte der Leiterplatte im Gerätegehäuse integriert. Aufgrund der vorgegebenen kompakten Abmessungen eines derartigen Mobilfunkgeräts ist es deshalb schwierig, in dessen Gehäuse zusätzlich eine Aufnahmekamera, insbesondere Digitalkamera, mit unterzubringen. Denn eine solche Aufnahmekamera benötigt aufgrund ihrer Größe und mechanischen Anforderungen an ihr Kameragehäuse Platz im Funkkommunikationsgerät.

Insbesondere stellt sich die Aufgabe, ein Funkkommunikationsgerät bereitzustellen, in dessen Gehäuse zusätzlich eine Aufnahmekamera unter weitgehender Beibehaltung der ursprünglichen Gehäuseabmessungen des Funkkommunikationsgeräts unterbringbar ist. Diese Aufgabe wird vorzugsweise durch ein Funkkommunikationsgerät gelöst, bei dem die Koppelstruktur aus der Leiterplatte und der angekoppelten Flachantenne eine von ihrer Vorder- zur Rückseite durchgehende Aussparung aufweist, in der eine Kamera integriert ist.

Deren Aufnahmeoptik lässt sich ggf. in vorteilhafter Weise zwischen der Vorder- und Rückseite der Koppelstruktur hin- und herbewegen.

Dadurch lassen sich Funkkommunikationsgeräte mit kompakten Gehäuseabmessungen bereitstellen, in denen sowohl mindestens eine Flachantenne als auch eine Aufnahmekamera integriert sind. Insbesondere kann durch den Ausschnitt bzw. die Aussparung in der jeweiligen Koppelstruktur aus Leiterplatte und angekoppelter Flachantenne die Aufnahmekamera im Gehäuse des jeweiligen Funkkommunikationsgeräts derart untergebracht werden, dass sich ihre Aufnahmeoptik zwischen der Vorder- und Rückseite des Gehäuses hin- und herbewegen lässt, insbesondere um 180° von vorne nach hinten (und umgekehrt), verdrehen lässt. Dabei ist gleichzeitig eine unerwünschte Aufdickung des Gerätes aufgrund der zusätzlichen Kamera weitgehend vermieden, da aufgrund der von der Vorder- zur Rückseite durchgehenden Aussparung in der Koppelstruktur, d.h. sowohl in der Leiterplatte als auch in der daran angekoppelten Flachantenne, die Gesamttiefe bzw. Gesamtdicke des Gehäuses für die Unterbringung der Kamera als lichte Weite zur Verfügung steht. Insbesondere sind auf diese Weise Funkgeräte mit flacher Gehäuseform, d.h. geringer Dicke, ermöglicht.

Eine weitere Weiterbildung betrifft insbesondere eine Koppelstruktur aus mindestens einer Leiterplatte und mindestens einer mit Höhenabstand daran angekoppelten Flachantenne für ein Funkkommunikationsgerät, wobei die Koppelstruktur eine von ihrer Vorder- zur Rückseite durchgehende Aussparung aufweist, in der eine Kamera derart integrierbar ist, dass deren Aufnahmeoptik sich zwischen der Vorder- und Rückseite hin- und herbewegen lässt.

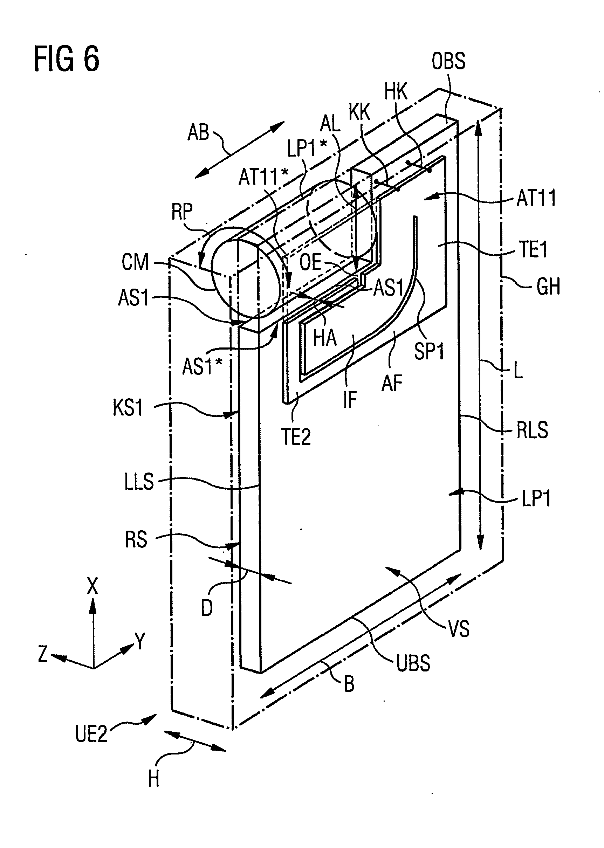

Figur 6 zeigt schematisch in räumlicher Darstellung beispielhaft ein erstes Funkkommunikationsgerät UE. Dieses Funkkommunikationsgerät UE weist im Inneren seines Gehäuses GH eine Leiterplatte LP1 und eine Flachantenne AT11 auf, die an die Leiterplatte LP1 unter Bildung einer Koppelstruktur KS1 zum Senden und/oder Empfangen elektromagnetischer Funkstrahlungsfelder angekoppelt ist. Dabei ist das Gehäuse GH lediglich durch strichpunktiert gezeichnete Außenkonturen angedeutet, um einen Blick ins Innere des Funkkommunikationsgeräts UE freizugeben. Das Gehäuse GH weist im wesentlichen eine flache Quaderform auf, d.h. es ist von seiner Vorderseite sowie von seiner Rückseite aus betrachtet im wesentlichen rechteckförmig ausgebildet. Die Leiterplatte LP1 ist entsprechend dem quaderförmigen Innenraum des Gehäuses GH in erster Näherung ebenfalls flach rechteckförmig ausgebildet. In der Figur 6 ist der Umriss einer solchen flach rechteckförmigen Leiterplatte strichpunktiert mit eingezeichnet und mit dem Bezugszeichen LP1* versehen. Ihre Abmessungen hinsichtlich maximaler Länge L und maximaler Breite B entsprechen weitgehend denen des quaderförmigen Innenraums des Gehäuses GH. Auch ihre Dicke D ist derart dimensioniert, dass die Gesamthöhe aus Leiterplatte und den ein oder mehreren an ihr angekoppelten Sende- und/oder Empfangsantennen höchstens gleich der Tiefe H des Gehäuses GH ist. Auf der Leiterplatte können dabei eine Vielzahl elektrischer Baugruppen zum Senden und/oder Empfangen von Funksignalen, wie z.B. eine Hochfrequenzbaugruppe, eine Energieversorgungseinheit (wie z.B. eine Batterie oder ein Akkumulator), Ein- und/oder Ausgabeeinheiten (wie z.B. Tastatur, Display, Lautsprecher, usw.), Steuer- und Signalverarbeitungsbaügruppen für zu empfangende und/oder abzusendende Funksignale, usw., angebracht sein. Diese Bestückungs-Baugruppen sind in der Figur 6 der zeichnerischen Einfachheit halber auf der Leiterplatte weggelassen worden. In der Praxis sind die Abmessungen der Leiterplatte, d.h. deren Länge, Breite sowie Dicke, somit im wesentlichen durch die jeweilig gewünschte Geometrieform des Gehäuses begrenzt.

Vereinfacht betrachtet weist die Leiterplatte LP1 von Figur 6 vier Seitenränder LLS, OBS, RLS, UBS auf, wobei die beiden Längsseiten LLS, RLS im wesentlichen orthogonal zu den Breitseiten OBS, UBS verlaufen. Zusammengesetzt bilden sie bis auf eine Lücke AS1 im Bereich der linken oberen Ecke von Figur 6, d.h. im Bereich des Schnittpunkts der oberen Breitseite OBS mit der linken Längsseite LLS die Außenkontur eines Rechtecks. Ihre Abmessungen, d.h. ihre Länge L und Breite B, sind vorzugsweise derart dimensioniert, dass ihre Längserstreckung L größer als ihre Breite B ist. Ihre räumlich geometrischen Verhältnisse sind in der Figur 6 dadurch veranschaulicht, dass dort zusätzlich die Koordinaten X, Y, Z eines kartesischen Koordinatensystems mit eingezeichnet sind. Dabei erstreckt sich die X-Koordinate entlang den Längsseiten LLS, RLS der Leiterplatte LP1, während die Y-Richtung parallel zu den Breitseiten OBS, UBS der Leiterplatte LP1 verläuft. Die Bauelementbestückungsfläche der Leiterplatte LP1 liegt somit im wesentlichen in der X,Y-Ebene. Die Z-Richtung ist dabei der Höhe bzw. Dicke D der Leiterplatte LP1 mit ihren verschiedenen Komponenten, wie z.B. Hochfrequenzbaugruppe, Ein-/Ausgabeeinheiten, Steuerbaugruppen, Auswertebaugruppen, usw. zugeordnet.

Um nun trotz des begrenzten, fest vorgegebenen Platzangebots im Inneren des Gehäuses GH zusätzlich zur Koppelstruktur aus Leiterplatte und daran angekoppelter Antenne auch noch eine Aufnahmekamera CM im Inneren des Gehäuses GH unter Beibehaltung der bisherigen Gehäuseabmessungen unterbringen zu können, ist in der Koppelstruktur aus der Leiterplatte und der angekoppelten Flachantenne eine von ihrer Vorder- zur Rückseite durchgehende Aussparung vorgesehen. Die Aussparung in der Leiterplatte LP1 ist dabei mit AS1 bezeichnet. Im vorliegenden Ausführungsbeispiel von Figur 6 ist die von der Vorderseite VS zur Rückseite RS der Koppelstruktur durchgehende Aussparung AS1 in der Leiterplatte LP1 im Eckbereich zwischen deren linken Längsseite LLS und deren oberen Stirnseite bzw. Breitseite OBS vorgesehen (bei Blickrichtung in z-Richtung auf die Vorderseite VS). Die Aussparung bzw. der Ausschnitt AS1 ist somit in der X,Y-Ebene betrachtet auf zwei Seiten nach außen offen. Sie ist im wesentlichen rechteckförmig ausgebildet, so dass eine Art rechteckförmige Aufnahmekammer für die Kamera CM gebildet ist. Im Gehäuse ist natürlich ebenfalls eine entsprechende Öffnung bzw. ein Ausschnitt für die Kamera vorgesehen.

Beim Funkkommunikationsgerät UE weist auch die in einer Schichtebene über der Leiterplatte LP1 angekoppelte Flachantenne AT11 gegenüber ihrer gedachten rechteckförmigen Grundform einen entsprechend rechteckförmigen Ausschnitt AS1* im linken oberen Eckbereich der Koppelstruktur KS1 weitgehend kongruent, d.h. deckungsgleich zur Aussparung AS1 der Leiterplatte LP1 auf. Die ursprünglich rechteckförmige Grundform der Flachantenne AT11 ist dabei in der Figur 6 strichpunktiert angedeutet und mit dem Bezugszeichen AT11* versehen. In Draufsicht von vorne überlappt sie dabei auch diesen linken Eckbereich der ursprünglich rechteckförmigen Leiterplatte LP1. Die Koppelstruktur KS1 ergibt sich somit aus der Überlagerung der ursprünglich rechteckförmigen Leiterplatte LP1* und der im Höhenabstand HA dazu parallelschichtartig angekoppelten, rechteckförmigen Antenne AT11*, wobei - bei Blickrichtung in z-Richtung auf die Vorderseite VS - deren gemeinsamer linker Eckbereich wie ein rechteckförmiges Fenster ausgeschnitten ist.

Die mit dem rechteckförmigen Ausschnitt AS1* versehene Flachantenne AT11 ist in der Figur 6 im Bereich der oberen Stirnseite OBS der Leiterplatte LP1, d.h. in der oberen Hälfte der Leiterplatte LP1, in einem vorgebbaren Höhenabstand HA zur Bauelementbestückungsfläche der Leiterplatte LP1 als weitere Schicht angeordnet. Für sie ist zweckmäßigerweise ein Höhenabstand zwischen 4 und 11 mm gewählt. Dabei verläuft sie im wesentlichen parallel zur Bauelementbestückungsfläche der Leiterplatte LP1. Sie ist derart bezüglich der Leiterplatte LP1 ausgerichtet, dass ihre Außenberandungen bei einer gedachten orthogonalen Projektion auf die Bauelementbestückungsfläche der Leiterplatte LP1 im wesentlichen kongruent zu den Seitenrändern LLS, OBS, RLS, UBS der Leiterplatte LP1* zu liegen kommen. Mit anderen Worten ausgedrückt heißt das, dass die Flachantenne AT11 auch nicht über die vier Seitenränder der Bauelementbestückungsfläche der Leiterplatte LP1 hinaus verlängernd absteht. Die Flachantenne AT11 liegt also wie eine weitere Überlappungsschicht über der Lageebene der Leiterplatte LP1 innerhalb des von deren vier Seitenrändern begrenzten Raumbereichs, wodurch sich in vorteilhafter Weise eine kompakte Koppelstruktur und somit flache Gerätebauformen realisieren lassen.

Die Flachantenne AT11 umrahmt die rechteckförmige Aussparung AS1 der Leiterplatte LP1 aufgrund ihrer zu dieser deckungsgleichen Aussparung AS1* somit in Form eines L-Profils. Allgemein ausgedrückt geht sie aus der gedachten rechteckförmigen Antennengrundform AT11* dadurch hervor, dass sie in einem Eckbereich zwischen einer Längsseite und einer Breitseite einen nach außen offenen, rechteckförmigen Ausschnitt AS1* aufweist, unter dem der in etwa deckungsgleiche Ausschnitt der Leiterplatte liegt. Auf diese Weise setzt sich das L-förmige Profil der Antenne AT11 aus einem ersten, in X-Längsrichtung verlaufenden, rechteckförmigen Streifenelement TE1 sowie einem dazu orthogonal in Y-Richtung verlaufenden, zweiten, rechteckförmigen Streifenelement TE2 zusammen. Das zweite Streifenelement schalt dabei den Grund bzw. Boden der Aussparung AS1 der Leiterplatte LP1 zumindest auf einer Teilstrecke in Y-Richtung ein, während das erste Streifenelement die in X-Längsrichtung verlaufende Begrenzungswand des Einschnitts AS1 der Leiterplatte LP1 zumindest auf einer Teilstrecke begrenzt. Hier im Ausführungsbeispiel von Figur 6 bildet das erste Streifenelement der L-förmigen Antenne AT11 also ein rechtes Rahmenteil zur im linken Eckbereich der Leiterplatte LP1 vorgesehenen Aussparung AS1.

Die Flachantenne AT11 ist über einen sogenannten "heißen Leiter" KK, d.h. über einen mechanischen und elektrischen Kontakt, im Bereich der oberen Stirnseite OBS der Leiterplatte LP1 an diese angeschlossen und erhält von dort elektrische Energie zum Abstrahlen von elektromagnetischen Funkwellen bzw. leitet empfangene Energie von Funkwellen an die Hauptbaugruppe auf der Leiterplatte weiter. Gleichzeitig ist die Antenne AT11 an einem weiteren Ortspunkt, der vom heißen Leiter KK in Y-Richtung versetzt ist, an einen sogenannten "kalten Leiter" HK angeschlossen. Über diesen ist die Antenne AT11 mit der Masse der Leiterplatte LP1 verbunden. Eine solche Massekontaktierung der Flachantenne AT11 ist vorzugsweise bei sogenannten λ/4-Antenne vorgesehen. Insbesondere kann die Flachantenne AT11 als sogenannte PIFA (Planar Inverted F-Antenna) ausgebildet sein.

Allgemein betrachtet kann die jeweilige Flachantenne bzw. Patchantenne durch ein elektrisch leitfähiges Flächenelement gebildet sein, das durch galvanische, kapazitive und/oder induktive Kopplung an die Leiterplatte LP1 angekoppelt ist.

Auf diese Weise lässt sich in die Aussparung AS1, AS1* der Koppelstruktur KS1 hinein die Kamera CM integrieren. Für sie ist vorzugsweise eine digitale Bildkamera verwendet. Aufgrund der von der Vorderseite VS zur Rückseite RS durchgehenden Aussparung AS1 der Leiterplatte LP1 sowie der Aussparung AS1* der Flachantenne AT11 lässt sich die Aufnahmeoptik der Kamera CM zwischen der Vorderseite VS und der Rückseite RS des Gehäuses GH in entsprechenden Ausschnitten hin- und herbewegen. Diese Verdrehmöglichkeit der Kamera CM in verschiedene Blickwinkel zwischen der Vorderseite VS und der Rückseite RS des Funkkommunikationsgeräts UE ist in der Figur 6 durch einen Doppelpfeil RP angedeutet. In der Figur 6 ist die Aufnahmekamera CM insbesondere kreiszylinderförmig ausgebildet, wobei ihre Verdrehachse in Y-Richtung verläuft. Dadurch lässt sich ihre Aufnahmeoptik nahezu um 360° verdrehen. Zumindest ist es ermöglicht, ihre Aufnahmeoptik zwischen der Vorderseite VS und der Rückseite RS des Gehäuses GH von 0° bis 180° hin- und herzuschwenken. Dadurch lässt sich die Aufnahmekamera CM flexibel sowohl zur Eigenaufnahme des jeweiligen Benutzers als auch zur Aufnahme von Bildern aus der Umgebung verwenden, ohne dass es erforderlich ist, das Gerät selbst herumdrehen, d.h. aus seiner Bedienlage verdrehen zu müssen.

Um in zwei verschiedenen Frequenzbändern Funksignale senden und/oder empfangen zu können, weist die Flachantenne AT11 einen Spalt SP1 auf, der im Inneren der Antennenfläche im Mittenbereich zwischen der Stromspeisungs-Kontaktierung KK und der Massekontaktierung HK des ersten Streifenelements des L-Profils beginnt und am in Y-Richtung verlaufenden Außenrand des zweiten Streifenelements der L-förmigen Antenne AT11 am Grund deren Aussparung AS1* mit einem nach außen offenen Ende OE endet. Der Spalt SP1 beschreibt dabei einen Bogen und/oder durchläuft gegebenenfalls ein oder mehrere mäanderförmige Krümmungen oder Verwinkelungen. Auf diese Weise lässt sich die plane Fläche der Flachantenne AT11 gewissermaßen zweiteilen, so dass elektromagnetische Wellen auf einer ersten Teilfläche IF entlang der inneren Krümmung des ein- oder mehrfach gewinkelten Spalts SP1 entlanglaufen sowie eine erste Resonanzfrequenz erzeugen können. Entlang einem zweiten, äußeren Laufweg können die Funkwellen entlang der zweiten Teilfläche AF die Außenkrümmung des Spalts SP1 umlaufen, wodurch für die elektromagnetischen Funkwellen ein längerer Laufweg und damit eine gegenüber der ersten Resonanzfrequenz niedrigere Resonanzfrequenz resultiert. Durch entsprechende Abstimmung der Länge des Spalts SP1 kann die Lauflänge des inneren und äußeren Patches bzw. Antennenteils IF, AF an die jeweilig geforderte Übertragungsfrequenz angepasst werden. Die Länge des Spalts SP1 lässt sich beispielsweise durch entsprechende Wahl der Länge der Seitenteile TE1, TE2 der L-förmigen Geometrieform der Flachantenne AT11 und/oder durch entsprechende Winkelung des Spalts SP1 einstellen. Auf diese Weise ist eine dualbandfähige Flachantenne AT11 gebildet. Sie kann beispielsweise für den Empfang und/oder die Abstrahlung im Bereich von 900 MHz für GSM (Global System for Mobile Communication) sowie gleichzeitig im demgegenüber höheren Frequenzbereich von 1800 MHz für PCN (Private Communication Networks) oder für UMTS- Funkfrequnzbereiche (universal mobile telecommunication system) bereitgestellt werden.

Selbstverständlich kann es auch zweckmäßig sein, die an zwei Seiten nach außen offene, rechteckförmige Aussparung in der Koppelstruktur KS1 auch - bei Draufsicht auf die Vorderseite VS - im rechten Eckbereich zwischen der rechten Längsseite RLS und der oberen Stirnseite OBS der Leiterplatte LP1* vorzusehen. Der rechteckförmige Ausschnitt AS1, AS1* in der Koppelstruktur KS1 weist zweckmäßigerweise eine Breite AB in Y-Richtung und eine Länge AL in X-Richtung auf, die.weitgehend den Abmessungen der Kamera CM in Breite und Länge entspricht. Die Breite AB der Aussparung in der Koppelstruktur ist zweckmäßigerweise zwischen 1 cm bis 3 cm, insbesondere um etwa 2,5 cm, gewählt. Die Länge AL der Aussparung in der Koppelstruktur ist vorzugsweise zwischen 1 cm bis 2 cm, insbesondere um etwa 1,5 cm, dimensioniert.

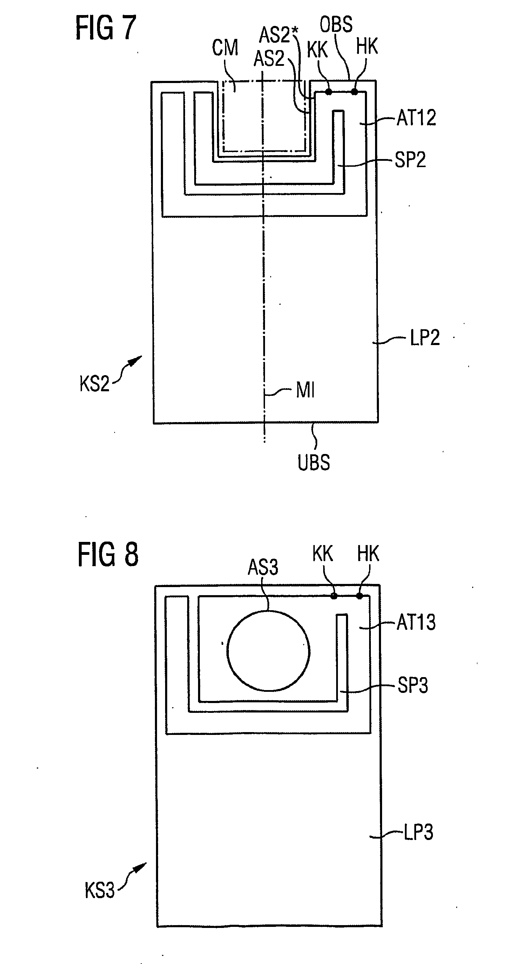

Gegebenenfalls kann es auch zweckmäßig sein, eine im wesentlichen rechteckförmige, randseitig nach außen offene Aussparung im Mittenbereich zwischen der linken und der rechten Längsseite der Leiterplatte im Bereich deren oberen Stirnseite vorzusehen. Eine derart gegenüber Figur 6 modifizierte Koppelstruktur ist in der Figur 7 vereinfacht in Draufsicht von der Vorderseite her gezeichnet und mit KS2 bezeichnet. Sie geht aus der Koppelstruktur der ursprünglich rechteckförmigen Leiterplatte LP1* und der daran angekoppelten, ebenfalls ursprünglich rechteckförmigen Flachantenne AT11* dadurch hervor, dass jetzt an Stelle der Aussparungen AS1, AS1* im Bereich der oberen linken Ecke ein deckungsgleicher, rechteckförmiger Ausschnitt AS2, AS2* im Mittenbereich der oberen Stirnseite OBS der Leiterplatte LP vorgesehen ist. Die derart modifizierte Leiterplatte ist in der Figur 7 mit LP2 bezeichnet. Dadurch ist eine U-profilförmige Aufnahmekammer für die Aufnahmekamera CM gebildet. Diese ist bezüglich ihrer lichten Weite achssymmetrisch zur strichpunktiert eingezeichneten Mittenlinie MI ausgebildet, die durch die Mitte der oberen und unteren Breitseite OBS, UBS sowie parallel zu den Längsseiten LLS, RLS der Leiterplatte LP2 verläuft. Die Aufnahmekammer ist im Bereich der oberen Stirnseite OBS der Leiterplatte LP2 randseitig nach außen offen, so dass sich die Aufnahmekamera CM dort modulartig unterbringen und sich in X-Richtung hinein- und herausschieben lässt. Dadurch ist ein einfacher und schneller Ein- und Ausbau gewährleistet. Gleichzeitig kann bei der Fabrikation von Funkkommunikationsgeräten mit und ohne Aufnahmekamera jeweils dieselbe Koppelstruktur verwendet werden, was die Produktionsvorgänge sowie die Vorratshaltung vereinfacht. In der Figur 7 umgibt die Antenne AT12 die rechteckförmige Aufnahmekammer U-profilartig. Mit anderen Worten ausgedrückt heißt das, dass die Flachantenne AT12 im Höhenabstand HA zur Leiterplatte LP2 oberhalb deren Bestückungsfläche in Form eines U-Profils angeordnet ist. Im Draufsichtsprofil von Figur 7, d.h. bei gedachter orthogonaler Projektion zur Bestückungsfläche der Leiterplatte LP2 deckt die Flachantenne AT12 somit zwei sich in X-Richtung erstreckende, schenkelartige Teilstücke der Leiterplatte LP2 links und rechts von der rechteckförmigen, mittig angeordneten Aufnahmekammer sowie einen streifenförmigen Leiterplattenabschnitt entlang dem Boden der Aufnahmekammer in Y-Richtung ab. Die Flachantenne AT12 weist entsprechend der Antenne AT11 einen Spalt SP2 auf, der jetzt U-förmig verläuft.

Durch die achssymmetrische Anordnung der Aufnahmekammer in der Koppelstruktur KS2 ist für die Aufnahmeoptik der Kamera CM eine symmetrische Ausrichtung bezogen auf das Gesichtsfeld des jeweiligen Benutzers ermöglicht, wodurch die Bedienung der Kamera CM insbesondere bei Eigenaufnahmen vereinfacht ist.

Gegebenenfalls kann es auch zweckmäßig sein, im Innenbereich der Koppelstruktur aus Leiterplatte und Flachantenne, d.h. innerhalb deren gemeinsamen Überlappungsbereich eine Aussparung in Z-Richtung, d.h. orthogonal zur X,Y-Ebene derart vorzusehen, dass die Aussparung von der Flachantenne ringsum eingerahmt ist und nicht wie in Figur 6 an zwei Seitenrändern der Leiterplatte LP1 frei zugänglich bzw. offen ist. Dies ist im Draufsichtsbild von Figur 8 anhand einer Leiterplatte LP3 mit einer über ihr angekoppelten Flachantenne AT13 veranschaulicht, deren Koppelstruktur und Geometrieform weitgehend der der Leiterplatte LP1* und der Flachantenne AT11* von Figur 6 entspricht, aber jetzt im gemeinsamen Deckungsbereich von Leiterplatte und angekoppelter Flachantenne im Flächeninneren eine von der Vorderseite zur Rückseite durchgehende gemeinsame Aussparung AS3 aufweist. Diese Durchgangsöffnung weist im wesentlichen eine kreisförmige Geometrieform in der X,Y-Ebene auf. Sie wird dabei vollständig von der Flachantenne AT13 ringsum eingeschlossen. Diese von der Vorderseite zur Rückseite durchgehende Aussparung AS3 eignet sich vorzugsweise zum Einbau einer Aufnahmekamera, die einen kugelförmigen Verstellmechanismus für ihre Aufnahmeoptik aufweist. Auch dadurch ist eine platzsparende Unterbringung der Aufnahmekamera unter weitgehender Beibehaltung der ursprünglichen Abmessungen des Gehäuses GH ermöglicht.

Auch diese Flachantenne AT13 ist hier wie die Flachantennen AT11, AT12 als Dualband-Antenne ausgebildet. Dazu weist sie einen Spalt SP3 auf, der einen Anfangspunkt in ihrer Innenfläche im Bereich des heißen und kalten Leiters KK, HK hat. Dieser Anfangspunkt ist dabei mit einem Längsabstand in X-Richtung zu diesen beiden Kontaktierungen KK, HK vorgesehen. Im einzelnen verläuft der Spalt SP3 entlang einem Teilabschnitt der rechten Längsseite der Leiterplatte LP3 in X-Richtung, an das sich um einen 90°-Winkel geknickt ein in Y-Richtung verlaufendes Teilstück anschließt, das anschließend wiederum um einen 90°-Winkel abknickt und somit im wesentlichen parallel zur linken Längsseite verläuft. Der Spalt SP3 endet dabei im Bereich der oberen Stirnseite der rechteckförmigen Leiterplatte LP3 und zwar im wesentlichen achssymmetrisch zu den beiden Kontaktierungen KK, HK.

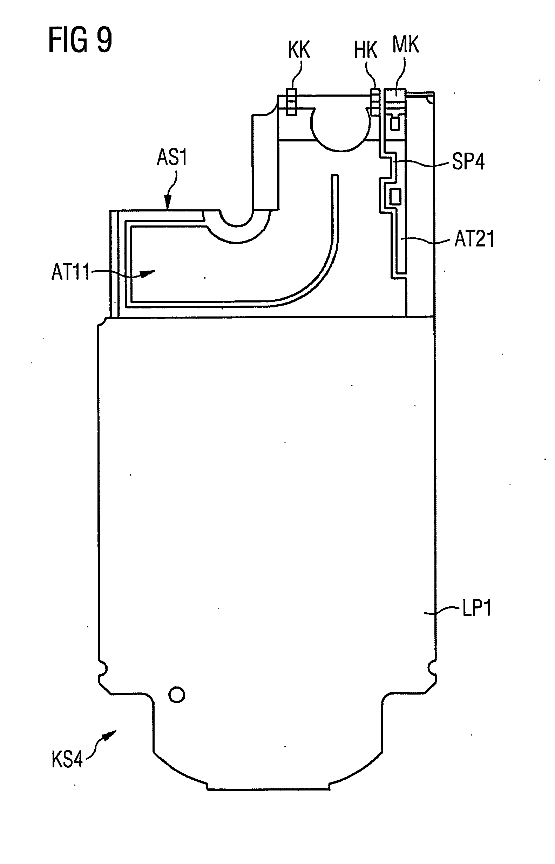

Figur 9 zeigt schematisch in Draufsicht die Leiterplatte LP1 von Figur 6 mit der angekoppelten Flachantenne AT11, wobei jetzt zusätzlich eine zweite Flachantenne AT21 im Bereich der rechten Längsseite der Leiterplatte LP1 vorgesehen ist. Um diese zweite Flachantenne AT21 ebenfalls im Bereich der oberen Hälfte der Leiterplatte LP1 zusätzlich zur ersten Flachantenne AT11 unterbringen zu können, ist die erste Flachantenne AT11 bezüglich ihrer Breite gegenüber dem Ausführungsbeispiel von Figur 6 etwas verkürzt. Durch einen durchgehenden Spalt SP4 ist die zweite Antenne AT21 vollständig von der Fläche der ersten Antenne AT11 separiert bzw. abgetrennt. Der Spalt SP4 verläuft dabei von der oberen Stirnseite OBS der Leiterplatte LP1 annäherungsweise in X-Richtung, wobei er durch ein oder mehrere mäanderförmige Abknickungen zur rechten Längsseite geführt wird und dort endet. Für die zweite Antenne AT21 ist eigens eine Kontaktierung MK zur Masse der Leiterplatte LP1 vorgesehen. Ihre Stromzufuhr erfolgt ebenfalls ausgehend vom heißen Leiter HK über kapazitive und/oder induktive Ankopplung. Auf diese Weise ist eine Triband-Antennenstruktur bereitgestellt, so dass ein Funkbetrieb auf drei verschiedenen Sende- und/oder Empfangsfreqenzen ermöglicht ist.

Zusammenfassend betrachtet lässt sich durch eine von der Vorder- zur Rückseite durchgehende Aussparung in der jeweiligen Koppelstruktur aus Leiterplatte und jeweilig angekoppelter Flachantenne eine platzsparende, modulartige Integration einer Aufnahmekamera bereitstellen, deren Aufnahmeoptik sich in einem großen Winkelbereich, vorzugsweise mindestens zwischen 0 und 180°, zwischen der Vorderseite und Rückseite, des Gerätegehäuses verdrehen lässt. Dadurch sind mit nur einer einzigen Kamera durch eine einfache Verdrehung deren Aufnahmeoptik sowohl Eigenbilder des Benutzers als auch Umgebungsbilder aufnehmbar. Eine eigens für Umgebungsbilder auf der Rückseite des Funkkommunikationsgeräts eingebaute, erste Kamera sowie eine eigens für Eigenbilder auf der Vorderseite eingebaute, zweite Kamera ist somit nicht erforderlich. Auf diese Weise lassen sich Funkkommunikationsgeräte, insbesondere Mobilfunktelefone, mit im Gehäuse integrierter Antenne und Kamera realisieren, die sehr flach ausgebildet sind. Eine unerwünschte Verdickung des Funkkommunikationsgeräts durch die zusätzliche Integration einer Kamera in dessen Gehäuse ist weitgehend vermieden. Vorzugsweise weist das Funkkommunikationsgerät mit einer derart in die Koppelstruktur von Leiterplatte und Antenne integrierten Kamera eine Gesamtdicke zwischen 11 und 25 mm auf. Die jeweilige Kamera lässt sich durch die Aussparung in der Koppelstruktur so unterbringen, dass eine Vielzahl von Aufnahmewinkeln für die Aufnahmeoptik der Aufnahmekamera einstellbar ist. Insbesondere kann die Kamera zumindest von der Vorderseite zur Rückseite des Funkkommunikationsgeräts hin- und herverdreht werden, ohne dass die Ausrichtung bzw. Bedienlage des jeweiligen Funkkommunikationsgeräts selbst verändert zu werden braucht.

Selbstverständlich kann die erfindungsgemäße Koppelstruktur aus Leiterplatte und daran angekoppelter Antenne mit einem von Vorder- zur Rückseite durchgehenden Ausschnitt für eine integrierte Aufnahmekamera nicht nur bei Mobilfunkgeräten mit flacher Rechtecksform, sondern auch bei Schiebetelefonen, Klapptelefonen, sowie sonstigen Typen und Geometrieformen von Mobilfunkgeräten verwendet sein.

Es kann natürlich auch eine feststehende Kamera in der jeweiligen Aussparung der Koppelstruktur in vorteilhafter Weise untergebracht sein.

## Patentansprüche

1. Funkkommunikationsgerät (UE1) mit mindestens einer Leiterplatine (LP14) und mindestens einer Flachantenne (AT14) in seinem Gehäuse (GHR), die mit Höhenabstand (HA) zueinander unter Bildung einer Koppelstruktur (KS14) angeordnet sind, wodurch in dieser Koppelstruktur (KS14) zwischen der Flachantenne (AT14) und der Leiterplatine (LP14) ein Koppelraum (KR) mit vorgebbarem Antennenvolumen eingeschlossen ist,
**dadurch gekennzeichnet,**
**dass** mindestens eine Kamera (CAM) derart im oder am Koppelraum (KR) der Koppelstruktur (KS14) angeordnet ist, dass sie gleichzeitig einen Bestandteil des Antennenvolumens der Koppelstruktur (KS14) bildet.

2. Funkkommunikationsgerät nach Anspruch 1,
**dadurch gekennzeichnet,**
**dass** die Kamera (CAM) eine elektromagnetisch empfindliche Kamerakomponente (LT) und eine elektromagnetisch unempfindliche Kamerakomponente (NLT) aufweist.

3. Funkkommunikationsgerät nach Anspruch 2,
**dadurch gekennzeichnet,**
**dass** die elektromagnetisch unempfindliche Kamerakomponente (NLT) im wesentlichen durch die Optik (OP) der Kamera (CAM) sowie deren Optikhalterung (HAL) gebildet ist.

4. Funkkommunikationsgerät nach einem der Ansprüche 2 oder 3,
**dadurch gekennzeichnet,**
**dass** lediglich die elektromagnetisch unempfindliche Kamerakomponente (NLT) im Koppelraum (KR) der Koppelstruktur (KS14) untergebracht ist.

5. Funkkommunikationsgerät nach einem der Ansprüche 2 mit 4,
**dadurch gekennzeichnet,**
**dass** die elektromagnetisch empfindliche Kamerakomponente (LT) zusätzlich mit einer elektromagnetischen Abschirmung (SK1) umgeben ist.

6. Funkkommunikationsgerät nach einem der Ansprüche 2 mit 5,
**dadurch gekennzeichnet,**
**dass** die elektromagnetisch empfindliche Kamerakomponente (LT) in der Leiterplatine (LP14) versenkt untergebracht ist.

7. Funkkommunikationsgerät nach einem der Ansprüche 2 mit 5,
**dadurch gekennzeichnet,**
**dass** die elektromagnetisch empfindliche Kamerakomponente (LT) auf der der Flachantenne (AT14) gegenüberliegenden Seite der Leiterplatine (LP14) außerhalb des Koppelraums (KR) der Koppelstruktur (KS14) angeordnet ist.

8. Funkkommunikationsgerät nach einem der vorhergehenden Ansprüche,
**dadurch gekennzeichnet,**
**dass** die Kamera (CAM) hinsichtlich ihrer Längserstreckung im wesentlichen orthogonal zur Lageebene der Leiterplatine (LP14) und der Flachantenne (AT14) angeordnet ist.

9. Funkkommunikationsgerät nach einem der vorhergehenden Ansprüche,
**dadurch gekennzeichnet,**
**dass** die Kamera (CAM) in der Lageebene der Flachantenne (AT14) betrachtet in einer lochartigen Aussparung (LO) der Flachantenne (AT14) positioniert ist und ringsum von der Antennenfläche der Flachantenne (AT14) eingeschlossen ist.

10. Funkkommunikationsgerät nach einem der vorhergehenden Ansprüche,
**dadurch gekennzeichnet,**
**dass** die Kamera (CAM) bezogen auf die Querausdehnung des Gehäuses (GHR) im wesentlichen mittig angeordnet ist.

11. Funkkommunikationsgerät nach einem der vorhergehenden Ansprüche,
**dadurch gekennzeichnet,**
**dass** als Flachantenne (AT14) eine PIFA-("Planar-Inverted-F-Antenna") Antenne vorgesehen ist, deren Innenteil (IP) von ihrem Außenrahmenteil (AP) durch einen Schlitz (SLI) zumindest teilweise getrennt ist.

12. Funkkommunikationsgerät nach Anspruch 11,
**dadurch gekennzeichnet,**
**dass** die Kamera (CAM) in der Lageebene der Flachantenne (AT14) betrachtet innerhalb eines Bereiches angeordnet ist, der von der Außenkontur (AK) des Außenrahmenteils (AP) begrenzt ist.

13. Funkkommunikationsgerät nach einem der Ansprüche 11 oder 12,
**dadurch gekennzeichnet,**
**dass** die Kamera (CAM) etwa im Zentrum des Innenteils (IP) der Flachantenne (AT14) positioniert ist.

14. Funkkommunikationsgerät nach einem der Ansprüche 11 oder 12,
**dadurch gekennzeichnet,**
**dass** die Kamera (CAM) in der Lageebene der Flachantenne (AT14) betrachtet im Schlitz (SLI) zwischen dem Außenrahmenteil (AP) und dem Innenteil (IP) der Flachantenne (AT14) angeordnet ist.

15. Funkkommunikationsgerät nach Anspruch 11,
**dadurch gekennzeichnet,**
**dass** der Außenrahmenteil (AP) im Bereich einer Ecke der Flachantenne (AT14) eine Aussparung (AS14) aufweist, in der die Kamera (CAM) angeordnet ist.

16. Funkkommunikationsgerät nach einem der vorhergehenden Ansprüche,
**dadurch gekennzeichnet,**
**dass** die Leiterplatine (LP1) im wesentlichen rechteckförmig ausgebildet ist.

17. Funkkommunikationsgerät nach einem der vorhergehenden Ansprüche,
**dadurch gekennzeichnet,**
**dass** die Flachantenne (AT11) im Bereich der oberen Stirnseite (OBS) der Leiterplatine (LP1) angeordnet ist.

18. Funkkommunikationsgerät nach einem der vorhergehenden Ansprüche,
**dadurch gekennzeichnet,**
**dass** die Flachantenne (AT11) in einem vorgebbaren Höhenabstand (HA) zur Bauelementbestückungsfläche der Leiterplatine (LP1) in mindestens einer weiteren Schicht derart angeordnet ist, dass ihre gedachte orthogonale Projektion bezüglich der Bauelementbestückungsfläche der Leiterplatine (LP1) im wesentlichen innerhalb einer durch deren Seitenränder (LLS, OBS, RLS, UBS) aufgespannten Begrenzungsfläche liegt.

19. Funkkommunikationsgerät nach einem der vorhergehenden Ansprüche,
**dadurch gekennzeichnet,**
**dass** die Flachantenne (AT11) im wesentlichen parallel zur Bauelementbestückungsfläche der Leiterplatine (LP1) verläuft und dabei einen Bereich der Bauelementbestückungsfläche der Leiterplatine (LP1) dachartig abdeckt.

20. Funkkommunikationsgerät nach einem der vorhergehenden Ansprüche,
**dadurch gekennzeichnet,**
**dass** die Flachantenne (AT11) einen Spalt (SP1) aufweist, der im Inneren der Antennenfläche beginnt und bis zu einem am Außenrand der Antenne (AT11) nach außen offenen Ende (OE) verläuft.

21. Funkkommunikationsgerät nach einem der vorhergehenden Ansprüche,
**dadurch gekennzeichnet,**
**dass** die Koppelstruktur (KS1) aus der Leiterplatine (LP1) und der angekoppelten Flachantenne (AT11) eine von ihrer Vorder- (VS) zur Rückseite (RS) durchgehende Aussparung (AS1, AS1*) aufweist, in der die Kamera (CM) integriert ist.

22. Funkkommunikationsgerät nach Anspruch 21,
**dadurch gekennzeichnet,**
**dass** die von der Vorder- (VS) zur Rückseite (RS) durchgehende Aussparung (AS1, AS1*) in der Koppelstruktur (KS1) im Eckbereich zwischen einer Längsseite (LLS) und einer Breitseite (OBS) der Leiterplatine (LP1) vorgesehen ist, und dabei zwei offene Seiten aufweist.

23. Funkkommunikationsgerät nach Anspruch 22,
**dadurch gekennzeichnet,**
**dass** die Flachantenne (AT11) die Aussparung (AS1) der Leiterplatine (LP1) in Form eines L-Profils zumindest teilweise umrahmt.

24. Funkkommunikationsgerät nach Anspruch 21,
**dadurch gekennzeichnet,**
**dass** die von der Vorder- (VS) zur Rückseite (RS) durchgehende Aussparung (AS2, AS2*) in der Koppelstruktur (AS2) im Mittenbereich einer Stirnseite (OBS) der Leiterplatine (LP2) mit einer an dieser Stirnseite der Leiterplatine (LP2) offenen Seite vorgesehen ist, und dass diese Aussparung (AS2, AS2*) von der Flachantenne (AT12) zumindest teilweise U-förmig umrahmt ist.

25. Funkkommunikationsgerät nach Anspruch 21,
**dadurch gekennzeichnet,**
**dass** die Koppelstruktur (KS3) in ihrer Innenzone eine von der Vorder (VS)- zur Rückseite (RS) durchgehende Aussparung (AS3) zur Aufnahme der Kamera aufweist, die von der Flachantenne (AT13) ringsum eingerahmt ist.

26. Funkkommunikationsgerät nach einem der Ansprüche 21 mit 25,
**dadurch gekennzeichnet,**
**dass** die durchgehende Aussparung (AS1, AS1*) im wesentlichen rechteckförmig ausgebildet ist.

27. Funkkommunikationsgerät nach einem der vorhergehenden Ansprüche,
**dadurch gekennzeichnet,**
**dass** die Kamera (CM) derart verdrehbar ausgebildet ist, dass sich ihre Aufnahmeoptik zwischen der Vorder- (VS) und der Rückseite (RS) der Koppelstruktur (KS1) hin- und herbewegen lässt.

## Claims

1. Radio communication device (UE1) with a least one circuit board (LP14) and at least one flat antenna (AT14) in its housing (GHR), which are arranged at a distance (HA) from each other to form a coupling structure (KS14), with a coupling area (KR) being enclosed in this coupling structure (KS14) between the flat antenna (AT14) and the circuit board (LP14) with a specifiable antenna volume,
**characterised in that**,
at least one camera (CAM) is arranged in or on the coupling area (KR) of the coupling structure (KS14) so that it simultaneously forms a component of the antenna volume of the coupling structure (KS14).

2. Radio communication device in accordance with claim 1,
**characterised in that**,
the camera (CAM) features an electromagnetically-sensitive camera component (LT) and an electromagnetically insensitive camera component (NLT).

3. Radio communication device in accordance with claim 2,
**characterised in that**,
the electromagnetically insensitive camera component (NLT) is essentially formed by the optics (OP) of the camera (CAM) and by its optics mountings (HAL).

4. Radio communication device in accordance with claim 2 or 3
**characterised in that**,
only the electromagnetically insensitive camera component (NLT) is accommodated in the coupling area (KR) of the coupling structure (KS14).

5. Radio communication device in accordance with claim 2 through 4
**characterised in that**,
the electromagnetically-sensitive camera component (LT) is additionally surrounded by an electromagnetic screening (SK1).

6. Radio communication device in accordance with claim 2 through 5
**characterised in that**,
the electromagnetically-sensitive camera component (LT) is sunk into the circuit board (LP14).

7. Radio communication device in accordance with one of the claims 2 through 5,
**characterised in that**,
the electromagnetically-sensitive camera component (LT) is arranged on the side of the circuit board (LP14) opposite the flat antenna (AT14) outside the coupling area (KR) of the coupling structure (KS14).

8. Radio communication device in accordance with one of the previous claims
**characterised in that**,
the camera (CAM) is arranged as regards its lengthwise extent essentially at right angles to the position of the circuit board (LP14) and the flat antenna (AT14).

9. Radio communication device in accordance with one of the previous claims
**characterised in that**,
the camera (CAM), viewed from the level of the flat antenna (AT14), is positioned in a hole-type cutout (LO) of the flat antenna (AT14) and is surrounded by the antenna surface of the flat antenna (AT14).

10. Radio communication device in accordance with one of the previous claims
**characterised in that**,
the camera (CAM), is essentially arranged in the middle in relation to the transverse extent of the housing (HR)

11. Radio communication device in accordance with one of the previous claims
**characterised in that**,
a PIFA (Planer Inverted F-Antenna) is provided as the flat antenna (AT14), of which the inner part (IP) is at least partly separated from its outer part (AP) by a slot (SLI).

12. Radio communication device in accordance with claim 11
**characterised in that**,
the camera (CAM), viewed from the level of the flat antenna (AT14), is positioned within an area which is delimited by the outside contour (AK) of the outside frame part (AP),

13. Radio communication device in accordance with one of the claims 11 or 12
**characterised in that**,
the camera (CAM) is positioned roughly in the centre of the inner part (IP) of the flat antenna (AT14).

14. Radio communication device in accordance with one of the claims 11 or 12
**characterised in that**,
the camera (CAM), viewed from the level of the flat antenna (AT14), is arranged in the slot (SLI) between the outer frame part (AP) and the inner part (IP) of the flat antenna (AT14).

15. Radio communication device in accordance with claim 11
**characterised in that**,
the outer frame part (AP) features a cutout (AS14) in the area of a corner of the flat antenna (AT14) in which the camera (CAM) is arranged.

16. Radio communication device in accordance with one of the previous claims
**characterised in that**,
the circuit board (LP1) is essentially rectangular in shape.

17. Radio communication device in accordance with one of the previous claims
**characterised in that**,
the flat antenna (AT11) is arranged in the area of the upper side (OBS) of the circuit board (LP1).

18. Radio communication device in accordance with one of the previous claims
**characterised in that**,
the flat antenna (AT11) is arranged at a specifiable distance (HA) from the component mounting surface of the circuit board (LP1) in at least one further layer such that its imaginary orthogonal projection in relation to the component mounting surface of the circuit board (LP1) essentially lies within a restricted surface spanned by its edges (LLS, OBS, RLS, UBS).

19. Radio communication device in accordance with one of the previous claims
**characterised in that**,
the flat antenna (AT11) runs essentially in parallel to the component mounting surface of the circuit board (LP1) and doing so forms a cover over an area of the component mounting surface of the circuit board (LP1).

20. Radio communication device in accordance with one of the previous claims
**characterised in that**,
the flat antenna (AT11) features a slot (SP1) which begins in the inside of the antenna surface and runs to an end (OE) on the outside edge of the antenna (AT11) opening outwards.

21. Radio communication device in accordance with one of the previous claims
**characterised in that**,
the coupling structure (KS1) comprising the circuit board (LP1) and the coupled flat antenna (AT11) features a cutout (AS1, AS1*) running through it from the front (VS) to the rear (RS) into which the camera is integrated.

22. Radio communication device in accordance with claim 21
**characterised in that**,
the cutout (AS1, AS1*) running from the front (VS) to the rear (RS) in the coupling structure (KS1) is provided in the corner area between a long side (LLS) and a wide side (OBS) of the circuit board (LP1) and features two open sides.

23. Radio communication device in accordance with claim 22
**characterised in that**,
the flat antenna (AT11) partly surrounds the cutout (AS1) of the circuit board (LP1) in the form of an L-profile.

24. Radio communication device in accordance with claim 21
**characterised in that**,
the cutout (AS2, AS2*) running from the front (VS) to the rear (RS) in the coupling structure (KS2) is provided in the centre area of a front side (OBS) of the circuit board (LP2) with an open side at this front side of the circuit board (LP2), and that this cutout (AS2, AS2*) is at least partly surrounded by the flat antenna (AT12) in a U-form.

25. Radio communication device in accordance with claim 21
**characterised in that**,
the coupling structure (KS3) features in its inner zone a cutout (AS3) running through from the front (VS) to the rear (RS) to accept the camera, which is encircled by the flat antenna (AT13)

26. Radio communication device in accordance with claims 21 through 25
**characterised in that**,
the through cutout (AS1, AS1*) is essentially rectangular in shape.

27. Radio communication device in accordance with one of the previous claims
**characterised in that**,
the camera (CM) is embodied to be rotated such that its taking optics can be moved to and fro between the front (VS) and the rear (RS) of the coupling structure (KS1).

## Revendications

1. Appareil de radiocommunication (UE1) avec au moins une carte à circuits (LP14) et au moins une antenne (AT14) dans son boîtier (GHR), qui sont disposées avec un espacement en hauteur (HA) entre elles en formant une structure de couplage (KS14), de sorte qu'un espace de couplage (KR) avec un volume d'antenne prédéfinissable est inclus dans cette structure de couplage (KS14) entre l'antenne plate (AT14) et la carte à circuits (LP14),
**caractérisé en ce que**
au moins une caméra (CAM) est disposée dans ou sur l'espace de couplage (KR) de la structure de couplage (KS14) de telle sorte qu'elle forme en même temps un composant du volume d'antenne de la structure de couplage (KS14).

2. Appareil de radiocommunication selon la revendication 1,
**caractérisé en ce que**
la caméra (CAM) présente un composant de caméra (LT) sensible au plan électromagnétique et un composant de caméra (NLT) insensible au plan électromagnétique.

3. Appareil de radiocommunication selon la revendication 2,
**caractérisé en ce que**
le composant de caméra (NLT) insensible au plan électromagnétique est formé essentiellement par l'optique (OP) de la caméra (CAM) et son support d'optique (HAL).

4. Appareil de radiocommunication selon l'une quelconque des revendications 2 ou 3,
**caractérisé en ce que**
seul le composant de caméra (NLT) insensible au plan électromagnétique est logé dans l'espace de couplage (KR) de la structure de couplage (KS14).

5. Appareil de radiocommunication selon l'une quelconque des revendications 2 à 4,
**caractérisé en ce que**
le composant de caméra (LT) sensible au plan électromagnétique est entouré en supplément d'un blindage SK1) électromagnétique.

6. Appareil de radiocommunication selon l'une quelconque des revendications 2 à 5,
**caractérisé en ce que**
le composant de caméra (LT) sensible au plan électromagnétique est logé noyé dans la carte à circuits (LP14).

7. Appareil de radiocommunication selon l'une quelconque des revendications 2 à 5,
**caractérisé en ce que**
le composant de caméra (LT) sensible au plan électromagnétique est disposé sur le côté, opposé à l'antenne plate (AT14), de la carte à circuits (LP14) à l'extérieur de l'espace de couplage (KR) de la structure de couplage (KS14).

8. Appareil de radiocommunication selon l'une quelconque des revendications précédentes,
**caractérisé en ce que**
la caméra (CAM) est disposée en ce qui concerne son extension longitudinale sensiblement perpendiculairement au plan de position de la carte à circuits (LP14) et de l'antenne plate (AT14).

9. Appareil de radiocommunication selon l'une quelconque des revendications précédentes,
**caractérisé en ce que**
la caméra (CAM) est positionnée dans un évidement (LO) de type trou de l'antenne plate (AT14) vu dans le plan de position de l'antenne plate (AT14), et est enfermée tout autour par la surface d'antenne de l'antenne plate (AT14).

10. Appareil de radiocommunication selon l'une quelconque des revendications précédentes,
**caractérisé en ce que**
la caméra (CAM) est disposée sensiblement au centre par rapport à l'extension transversale du boîtier (GHR).

11. Appareil de radiocommunication selon l'une quelconque des revendications précédentes,
**caractérisé en ce que**
il est prévu comme antenne plate (AT14) une antenne PIFA ("Planar-Inverted-F-Antenna"), dont la partie intérieure (IP) est séparée au moins partiellement de sa partie de cadre extérieur (AP) par une fente (SLI).

12. Appareil de radiocommunication selon la revendication 11,
**caractérisé en ce que**
la caméra (CAM) est disposée, vue dans le plan de position de l'antenne plate (AT14), à l'intérieur d'une zone qui est délimitée par le contour extérieur (AK) de la partie de cadre extérieur (AP).

13. Appareil de radiocommunication selon l'une quelconque des revendications 11 ou 12,
**caractérisé en ce que**
la caméra (CAM) est positionnée à peu près au centre de la partie intérieure (IP) de l'antenne plate (AT14).

14. Appareil de radiocommunication selon l'une quelconque des revendications 11 ou 12,
**caractérisé en ce que**
la caméra (CAM) est disposée dans la fente (SLI) entre la partie de cadre extérieur (AP) et la partie intérieure (IP) de l'antenne plate (AT14), vue dans le plan de position de l'antenne plate (AT14).

15. Appareil de radiocommunication selon la revendication 11,
**caractérisé en ce que**
la partie de cadre extérieur (AP) présente dans la zone d'un angle de l'antenne plate (AT14) un évidement (AS14) dans lequel la caméra (CAM) est disposée.

16. Appareil de radiocommunication selon l'une quelconque des revendications précédentes,
**caractérisé en ce que**
la carte à circuits (LP1) est réalisée sensiblement avec une forme rectangulaire.

17. Appareil de radiocommunication selon l'une quelconque des revendications précédentes,
**caractérisé en ce que**
l'antenne plate (AT11) est disposée dans la zone du côté avant supérieur (OBS) de la carte à circuits (LP1).

18. Appareil de radiocommunication selon l'une quelconque des revendications précédentes,
**caractérisé en ce que**
l'antenne plate (AT11) est disposée à une distance en hauteur (HA) prédéterminable de la face d'équipement en composants de la carte à circuits (LP1) dans au moins une autre couche de telle sorte que sa projection orthogonale imaginaire par rapport à la face d'équipement en composants de la carte à circuits (LP1) est disposée sensiblement à l'intérieur d'une surface de délimitation tendue par ses bords latéraux (LLS, OBS, RLS, UBS).

19. Appareil de radiocommunication selon l'une quelconque des revendications précédentes,
**caractérisé en ce que**
l'antenne plate (AT11) est sensiblement parallèle à la face d'équipement en composants de la carte à circuits (LP1) et recouvre ici à la façon d'un toit une zone de la face d'équipement en composants de la carte à circuits (LP1) .

20. Appareil de radiocommunication selon l'une quelconque des revendications précédentes,
**caractérisé en ce que**
l'antenne plate (AT11) présente une fente (SP1), qui commence à l'intérieur de la face d'antenne et est agencée jusqu'à une extrémité (OE) ouverte vers l'extérieur sur le bord extérieur de l'antenne (AT11).

21. Appareil de radiocommunication selon l'une quelconque des revendications précédentes,
**caractérisé en ce que**
la structure de couplage (KS1) constituée de la carte à circuits (LP1) et de l'antenne plate (AT11) couplée à la carte présente un évidement (AS1, AS1*) continu de son côté avant (VS) vers le côté arrière (RS) dans lequel la caméra (CM) est intégrée.

22. Appareil de radiocommunication selon la revendication 21,
**caractérisé en ce que**
l'évidement (AS1, AS1*) continu du côté avant (VS) vers le côté arrière est prévu dans la structure de couplage (KS1) dans la zone d'angle entre un côté longitudinal (LLS) et un côté large (OBS) de la carte à circuits (LP1), et présente ici deux côtés ouverts.

23. Appareil de radiocommunication selon la revendication 22,
**caractérisé en ce que**
l'antenne plate (AT11) encadre au moins partiellement l'évidement (AS1) de la carte à circuits (LP1) sous la forme d'un profilé en L.

24. Appareil de radiocommunication selon la revendication 21,
**caractérisé en ce que**
l'évidement (AS2, AS2*) continu du côté avant (VS) vers le côté arrière (RS) est prévu dans la structure de couplage (AS2, AS2*) dans la zone centrale d'un côté avant (OBS) de la carte à circuits (LP2) avec un côté ouvert sur ce côté avant de la carte à circuits (LP2), et **en ce que** cet évidement (AS2) est encadré au moins en partie en forme de U par l'antenne plate (AT12).

25. Appareil de radiocommunication selon la revendication 21,
**caractérisé en ce que**
la structure de couplage (KS3) présente dans sa zone intérieure un évidement (AS3) continu du côté avant (VS) vers le côté arrière (RS) pour le logement de la caméra, qui est entouré tout autour par l'antenne plate (AT13).

26. Appareil de radiocommunication selon l'une des revendications 21 et 25,
**caractérisé en ce que**
l'évidement (AS1, AS1*) continu est conçu sensiblement avec une forme rectangulaire.

27. Appareil de radiocommunication selon l'une quelconque des revendications précédentes,
**caractérisé en ce que**
la caméra (CM) est conçue rotative de telle sorte que son optique de prise de vue peut être déplacée d'un côté et de l'autre entre le côté avant (VS) et le côté arrière (RS) de la structure de couplage (KS1).
